(19) Europäisches Patentamt
European Patent Office
Office européen des brevets

(11) Veröffentlichungsnummer: **0 234 219**
**B1**

(12) **EUROPÄISCHE PATENTSCHRIFT**

(45) Veröffentlichungstag der Patentschrift: **18.04.90**

(51) Int. Cl.$^5$: **C 08 J 9/06**

(21) Anmeldenummer: **87100389.3**

(22) Anmeldetag: **14.01.87**

(54) **Verfahren zum Verschäumen von Ester- und/oder Carbonsatgruppen enthaltenden thermoplastischen Kunststoffen.**

(30) Priorität: **24.01.86 DE 3602014**

(43) Veröffentlichungstag der Anmeldung:
**02.09.87 Patentblatt 87/36**

(45) Bekanntmachung des Hinweises auf die Patenterteilung:
**18.04.90 Patentblatt 90/16**

(84) Benannte Vertragsstaaten:
**DE FR GB IT NL**

(56) Entgegenhaltungen:
**DE-A-2 218 328**
**FR-A-2 154 783**
**US-A-4 343 912**

(73) Patentinhaber: **BAYER AG**
**D-5090 Leverkusen 1 Bayerwerk (DE)**

(72) Erfinder: **Hammer, Heinz, Dr.**
**Nussbaumer Wiese 4a**
**D-5060 Bergisch Gladbach (DE)**
Erfinder: **Kircher, Klaus, Dr.**
**Alfred-Kubin-Strasse 3**
**D-5090 Leverkusen 1 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

**EP 0 234 219 B1**

**Beschreibung**

Es ist bekannt, Schaumstoffe aus thermoplastischen Kunststoffen herzustellen, indem man in den Kunststoff ein organisches Treibmittel einarbeitet oder auf ein Kunststoffgranulat ein Treibmittel aufpudert, des sich bei den Temperaturen, bei denen der Kunststoff plastisch erweicht, unter Gasentwicklung zersetzt.

Für diesen Zweck sind verschiedenartige Verbindungen vorgeschlagen worden (siehe z.B. Angewandte Chemie 64 (1952) Seiten 65—76).

Das Treibmittel soll sich entweder volständig in gasförmige Spaltprodukte zersetzen oder die nichtgasförmigen Zersetzungsprodukte sollen im Kunststoff löslich sein. Vor allem dürfen sie nicht zu Verfährungserscheinungen oder nachteiligen Veränderungen der physikalischen Eigenschaften des Kunststoffen führen.

Technisch wird z.Zt. häufig Azodicarbonamid eingesetzt. Die Zersetzungsgase enthalten u.a. Ammoniakgas, welches zu Korrosion der Metallformen und sonstiger Apaprateteile sowie zu Geruchsbelästigungen führen kann.

Andere Beispiele von Treibmitteln, die besonders bei höheren Temperaturen verwendet werden, sind 5-Phenyltetrazol, Benzamide und Dihydrooxadiazinone, die in den US—A—3 442 829, 3 779 954 und 4 097 425 beschrieben sind.

Bekannt ist auch die Verwendung von 2,4-Dioxo-1,2-dihydro-4H-benzoxazinen der allgeinen Formel I

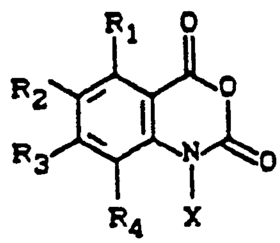

(I)

worin $R_1$ bis $R_4$ gleich oder verschieden Wasserstoff, geradkettige oder verzweigte Alkylreste mit 1 bis 4 Kohlenstoffatomen, Hydroxy- oder Nitrogruppen oder Halogenatome sowie $R_2$ darüber hinaus noch einen Molekülrest folgender Formel

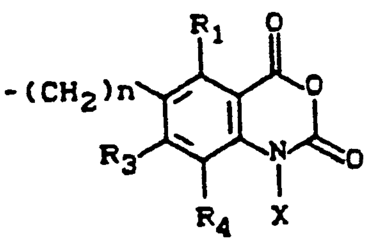

wobei n von 0—4 variieren kann, die Reste $R_1$, $R_3$ und $R_4$ die oben aufgeführte Bedeutung haben und X Wasserstoff oder geradkettige oder verzweigte Alkylreste mit 1—4 Kohelnstoffatomen bedeuten, zur Herstellung von Schaumstoffen aus thermoplastischen Kunststoffen. (Vergl. z.B. DE—A—2 126 146).

Das Verschäumen von Kunststoffen mit gasabspaltenden Verbindungen der Formel I ist in der Praxis nur eingeschränkt möglich. Die Verfahrensparameter bei einer technischen Schaumreaktion werden von dem zu verschäumenden Polymeren, von der verfügbaren Verarbeitungsanlage sowie von der Geometrie des herzustellenden Formteils vorgegeben; die fixen Zersetzungstemperaturen der Verbindungen der allgemeinen Formel I sind meist relativ hoch, die Gasabspaltung häufig zu langsam. Ihre Verwendung als Treibmittel erfordert daher ein angehobenes Temperaturniveau zur rascheren und vollständigeren Gasabspaltung, das in der Regel jedoch entweder praxisfremd und daher undurchführbar ist oder zu erhöhtem wirtschaftlichem und apparatetechnischem Aufwand führt. Generell bewirkt eine Temperaturerhöhung bei der Verschäumung mit Zersetzungstriebmitteln gleichzeitig eine stärkere Materialschädigung.

In der Patentschrift DE—A—2 218 328 wird die Verwendung einer Kombination von 2,4-Dioxo-1,2-dihydro-4-H-benzoxazinen und Hilfstreibmitteln, die saure oder basische Bestandeile abspaltende oder enthaltende Verbindungen umfassen, zur Herstellung von zelligen oder porösen Kunststoffartikeln beschrieben. Durch die Zugabe der Hilfstreibmittel wird die Zersetzungstemperatur der Verbindungen der Formel I herabgesetzt.

Es wurde nun gefunden, daß neutrale Salze der allgemeinen Formel II,

$$A_pEF_q \qquad (II)$$

die bei Verarbeitungstemperaturen bis 400°C nicht zersetzlich sind und folglich keine basischen oder

sauren Bestandteile abspalten, die Zersetzungstemperaturen von 2,4-Dioxo-1,2-dihydro-4-H-benzoxazinen auf das praxisrelevante Niveau absenken und es somit ermöglichen, bei in der Praxis üblichen Verfahrensparametern Schaumformteile mit zelliger oder poröser Schaumstruktur zu erhalten.

Gegenstand der vorliegenden Erfindung ist somit die Verwendung der Verbindungen der allgemeinen Formel (I) in Kombination mit Verbindungen der allgemeinen Formel (II) zur Herstellung von Schaumformteilen aus Ester- und/oder Carbonatgruppen enthaltenden thermoplastischen Kunststoffen.

Gegenstand der vorliegenden Erfindung ist auch ein Verfahren zur Herstellung von zelligen oder porösen Schaumstoffen aus Ester- und/oder Carbonatgruppen enthaltenden thermoplastischen Kunststoffen, das dadurch gekennzeichnet ist, daß man Verbindungen der allgemeinen Formel I

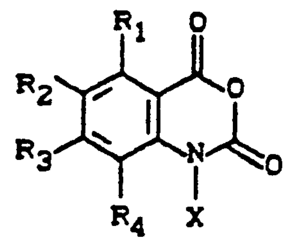

worin $R_1$ bis $R_4$ gleich oder verschieden Wasserstoff, geradkettige oder verzweigte Alkylreste mit 1 bis 4 Kohlenstoffatomen, Hydroxy- oder Nitrogruppen oder Halogenatome sowie $R_2$ darüber hinaus noch einen Molekülrest folgender Formel

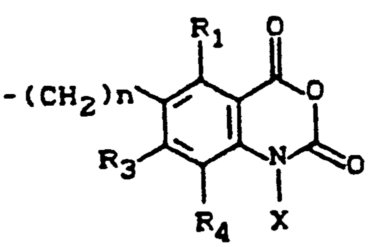

worin n von 0—4 variieren kann, die Reste $R_1$, $R_3$ und $R_4$ die oben aufgeführte Bedeutung haben und X Wasserstoff oder geradkettige oder verzweigte Alkylreste mit 1—4 Kohlenstoffatomen bedeuten, in Kombination mit Verbindungen der allgemeinen Formel II

$$A_pEF_q \qquad (II)$$

worin A ein Element der ersten Hauptgruppe des periodischen Systems bedeutet, E ein Element der dritten, vierten oder fünften Haupt- oder Nebengruppe des periodischen Systems, F für Fluor steht, p von 1—3 und q von 4—6 je nach Wertigkeit der Elekente E variieren können, in die Ester- und/oder Carbonatgruppen enthaltenden thermoplastischen Kunststoffe oberhalb deren Schmelztemperatur höchstens jedoch bei 240°C einarbeitet oder auf das Granulat dieser thermoplastischen Kunststoffe aufpudert und mit bekannten Verarbeitungsmaschinen bei Temperaturen von 150°C bis 350°C, vorzugsweise von 200°C bis 300°C zu Schaum-Formteilen verarbeitet. (Bezüglich der Gruppen des periodischen Systems sei auf Holeman-Wiberg, Lehrbuch der anorganischen Chemie, 37—39. Auflage, Verlag Walter de Gruyter und Co., Berlin 1956, Tabelle am Ende des Buches verweisen. Danach repräsentieren Li, B, C und N die obengenannten Hauptgruppen und Sc, Ti und V die obengenannten Nebengruppen.)

Als Verbindungen der allgemeinen Formel I eignen sich beispielsweise:
N-Methylisatosäureanhydrid, 5-Hydroxyisatosäureanhydrid, 5-Chlorisatosäureanhydrid, 3,5-Dichlorisatsäureanhydrid, 5-Bromisatosäureanhydrid, 3,5-Dibromisatosäureanhydrid, 5-Nitroisatosäureanhydrid, Isatosäureanhydrid, N-Ethyl-5-chlorisatosäureanhydrid, N-Methyl-5-nitroisatosäureanhydrid, 5-Methylisatosäureanhydrid, 5-Ethylisatosäureanhydrid, 5-n-Propylisatosäureanhydrid, 5-Isopropylisatosäureanhydrid, 5-tert.-Butylisatosäureanhydrid, 4-Methylisatosäureanhydrid, 4-Ethylisatosäureanhydrid, 4-n-Propylisatosäureanhydrid, 4-Isopropylisatosäureanhydrid, 4-n-Butylisatosäureanhydrid, 4-Isobutylisatosäureanhydrid, 4-tert.-Butylisatosäureanhydrid, Bisisatosäureanhydrid und Methylen-bis-isatosäureanhydrid.

Bevorzugt gelangen zur Anwendung:
Isatosäureanhydrid, 5-Chlorisatosäureanhydrid und 5-Nitroisatosäureanhydrid.

Die Verbindungen der Formel I werden in Mengen von 0,01 bis 20 Gew.-%, vorzugsweise 0,1 bis 10 Gew.-%, gang bevorzugt in Mengen von 0,1 bis 3 Gew.-%, bezogen auf Gewicht an thermoplastischem Kunststoff, eingesetzt.

Als Vertreter der Verbindungen mit der allgemeinen Formel II seien genannt:

Natrium- oder Kalium-tetrafluoroborat, Natrium- oder Kaliumhexafluorophosphat, Dilithium- oder Dinatrium- oder Dikaliumhexafluorotitanat, Dinatrium- oder Dikalium-hexafluorozirkonat, Kaliumhexafluorostannat, Natriumhexafluoroantimonat.

Bevorzugte Verbindungen sind Natrium-tetrafluoroborat, Kalium-tetrafluoroborat, Dikaliumhexafluorotinat.

Die Verbindungen der allgemeinen Formel II werden in Mengen von 0,01 bis 3 Gew.-%, bevorzugt 0,05 bis 1 Gew.-% bezogen auf Gewicht an thermoplastischem Kunststoff, eingesetzt.

Verbindungen der allgemeinen Formel II sind bis dato bereits als Flammschutzmittel für Polycarbonate bekannt (siehe beispielsweise DE—A—2 149 311 (Le A 13 999) und DE—A—2 800 923 (Mo 1694).

Alkalimetallsalze der Fluorborsäure sind außerdem als Umesterungskatalysatoren für die Polycarbonatherstellung und als Stabilisatoren der Polycarbonate bekannt (siehe US—A—3 625 920).

Es war somit nicht naheliegend, daß die Verbindungen der Formel II im vorliegenden Zusamenhang die Versetzung des Treibmittels begünstigen.

Erfindungsgemäß verschäumbare Ester- und/oder Carbonatgruppen enthaltende thermoplastische Kunststoffe sind solche Polymeren, die diese Gruppen zur Bildung der Polymerkette und nicht etwa nur als Seitengruppen der Polymerkette enthalten, also vorzugsweise thermoplastische aromatische Polyester, thermoplastische aromatische Polyestercarbonate sowie Mischungen dieser genannten thermoplastischen Kunststoffe.

Als erfindungsgemäß zu verschäumende thermoplastische, aromatische Polycarbonate kommen die durch Umsetzung von Diphenolen, insbesondere von Dihydroxydiarylalkanen, mit Phosgen oder Diestern der Kohlensäure erhältlichen Polykondensate in Betracht, wobei außer den unsubstituierten Dihydroxydiarylalkanen auch solche geeignet sind, deren Arylreste in o- und/oder m-Stellung zur Hydroxylgruppe Methylgruppen oder Halogenatome tragen. Ebenso sind verzweigte Polycarbonate geeignet.

Die zu verschäumenden Polycarbonate haben mittlere Gewichtsmittel-Molekulargewichte $\overline{Mw}$ zwischen 10 000 und 100 000, vorzugsweise zwischen 20 000 und 40 000, ermittelt durch Messungen der rel. Viskosität in $CH_2Cl_2$ bei 25°C und einer Konzentration von 0,5 g/pro 100 ml.

Geeignete Diphenole sind z.B. Hydrochinon, Resorcin, 4,4'-Dihydroxydiphenyl, Bis-(hydroxy-phenyl)-alkane wie beispielsweise $C_1$—$C_8$-Alkylen- bzw. $C_2$—$C_8$-Alkylidenbisphenole, Bis-(hydroxyphenyl)-cycloalkane wie beispielsweise $C_5$—$C_{15}$-Cycloalkylen- bzw. $C_5$—$C_{15}$-Cycloalkylidenbisphenole, Bis-(hydroxyphenyl)-sulfide, -ether, -ketone, isulfoxide oder -sulfone. Ferner α,α'-Bis-(hydroxyphenyl)-diisopropylbenzol sowie die entsprechenden kernalkylierten bzw. kernhalogenierten Verbindungen. Bevorzugt sind Polycarbonate auf Basis Bis-(4-hydroxyphenyl)-propan-2,2, Bis-(4-hydroxy-3,5-dichlorphenyl)-propan-2,2, Bis-(4-hydroxy-3,5-dimethylphenyl)-propan-2,2, Bis-(4-hydroxy-3,5-dibromphenyl)-propan-2,2, Bis-(4-hydroxyphenyl)-cyclohexan-1,1 sowie auf Basis von Dreikernbisphenolen wie α,α'-Bis-(4-hydroxyphenyl)-p-diisopropylbenzol.

Weitere für die Herstellung der Polycarbonate geeignete Diphenole sowie die Herstellung der Polycarbonate sind beispielsweise in den US-Patenten 3 028 365, 3 062 781, 3 148 172, 3 271 367 und 3 275 601 beschrieben.

Als erfindungsgemäß zu verschäumende thermoplastische, aromatische Polyester konnen solche in Frage, die aus aroamtischen Dicarbonsäure und Diphenolen aufgebaut sind.

Bevorzugte aromatische Dicarbonsäuren sind beispielsweise:
Isophthalsäure, Terephthalsäure, Diphenylether-4,4'-dicarbonsäure, Naphthalin-2,6-dicarbonsäure. Besonders bevorzugt sind Iso- und Terephthalsäure.

Bevorzugte Diphenole für die Herstellung der erfindungsgemäßen aromatischen Polyester und Polyestercarbonate sind Verbindungen der Formel:

$$HO—Z—OH \qquad (III),$$

worin Z einen zweiwertigen ein- oder mehrkernigen aromatischen Rest mit 6—30 C-Atomen bedeutet, wobei Z derart gebaut ist, daß die beiden OH-Gruppen direkt an je ein C-Atom eines aromatischen Systems gebunden sind.

Besonders bevorzugte Diphenole sind Verbindungen der Formel IV

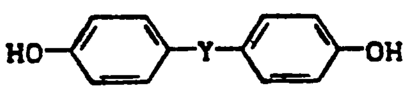

(IV),

in der

Y eine Einfachbindung, einen Alkylen- oder Alkylidenrest mit 1—7 C-Atomen, einen Cycloalkylen- oder Cycloalkylidenrest mit 5—12 C-Atomen, —O—, —S—,

$$-\underset{O}{\underset{\|}{S}}-,\ -SO_2-\ \text{oder}\ -\underset{O}{\underset{\|}{C}}-$$

bedeutet, sowie deren kernalkylierte und kernhalogenierte Derivate, z.B.

Hydrochinon,
Resorcin,
Dihydroxydiphenyle,
Bis-(hydroxyphenyl)-alkane,
Bis-(hydroxyphenyl)-cycloalkane,
Bis-(hydroxyphenyl)-ether,
Bis-(hydroxyphenyl)-ketone,
Bis-(hydroxyphenyl)-sulfoxide,
Bis-(hydroxyphenyl)-sulfone und
α,α'-Bis-(hydroxyphenyl)-diisopropylbenzole,

sowie deren kernalkylierte und kernhalogenierte Derivate.

Die wichtigsten Diphenole sind: Bisphenol A, Tetramethylbisphenol A, 1,1-Bis-(4-hydroxyphenyl)-isobutan, 1,1-Bis-(4-hydroxyphenyl)-cyclohexan, 4,4'-Dihydroxydiphenylsulfid, 4,4'-Dihydroxydiphenylsulfon, sowie deren di- und tetrahalogenierte Derivate. Besonders bevorzugt ist Bisphenol A. Es können auch beliebige Mischungen der genannten Diphenole verwendet werden.

Mögliche Verzweigungsmittel sind in den D—A—2940024 und 3007934 genannt.

Als kettenabbrecher für die aromatischen Polyester werden vorzugsweise Phenol, Alkylphenole mit $C_1$—$C_{12}$-Alkylgruppen, halogenierte Phenole, Hydroxydiphenyl, Naphthole, Chlorköhlensäureester aus solchen phenolischen Verbindungen und Chloride von aromatischen Monocarbonsäuren, die gegebenenfalls durch $C_1$—$C_{22}$-Alkylgruppen und Halogenatome substituiert sein können, in Mengen von 0,1 bis 10 Mol-% (im Falle von Phenolen bezogen auf Diphenole, im Falle von Säurechloriden bezogen auf Säuredichloride) verwendet. Weiterhin kommen die Chloride von aliphatischen Monocarbonsäuren mit bis zu 22 C-Atomen in Betracht.

Die Kettenabbrecher können, soweit es sich um phenolische Verbindungen handelt, dem Reaktionsgemisch vor Beginn oder während der Reaktion zugesetzt werden. Es muß jedoch noch genügend Säurechlorid zur Verfügung stehen, damit sie reagieren und die Kette begrenzen können; z.B. kann der Kettenabbrecher zusammen mit dem Diphenol eingesetzt werden, in der Lösung der Chloride der aromatischen Dicarbonsäuren enthalten sein, oder dem Reaktionsgemisch nach Herstellung eines Vorkondensats zugesetzt werden.

Sofern man als Kettenabbrecher Säurechloride und Chlorkohlensäureester verwendet, werden sie vorzugsweise gemeinsam mit den aromatischen Dicarbonsäuredichloriden eingesetzt. Diese Kettenabbrecher können dem Reaktionsgemisch auch noch zu einem Zeitpunkt zugesetzt werden, wenn die Chloride der Dicarbonsäuren schon weitgehend oder vollständig abreagiert haben.

Am Aufbau der aromatischen Polyester können auch bis jeweils 30 Mol-% der Dicarbonsäuren und Dihydroxyverbindungen aliphatische Baugruppen, z.B. Adipinsäure, Butandiol-1,4-beteiligt sein.

Weiterhin können die aromatischen Polyester teilweise aus aromatischen Hydroxycarbonsäuren, z.B. p-Hydroxy-benzoesäure aufgebaut sein. Der Anteil solcher Hydroxycarbonsäuren kann bis zu 100 Mol-% (bezogen auf Bisphenol) betragen.

Falls Iso- und Terephthalsäure gemeinsam am Aufbau der aromatischen Polyester beteiligt sind, kann deren Verhältnis 1:20 bis 20:1 betragen.

Als erfindungsgemäß zu verschäumende thermoplastische, aromatische Polyestercarbonate kommen Polymere in Betracht, die aus den gleichen Bausteinen aufgebaut sind wie die vorher erwähnten aromatischen Polyester, nur daß am Aufbau zusätzlich noch mindestens ein Kohlensäurederivat, bevorzugt Phosgen, beteiligt ist.

Die aromatischen Polyestercarbonate können bis zu 80 Mol-%, vorzugsweise bis zu 50 Mol-% Carbonatgruppen enthalten, bezogen auf die Summe von Ester- und carbonatgruppen. Sowohl der Ester als auch der Carbonatanteil der erfindungsgemäß zu verschäumenden aromatischen Polyestercarbonate kann in Form von Blöcken oder statistisch verteilt im Polykondensat vorliegen.

Zusätzlich zu den zu verschäumenden Ester- und/oder Carbonatgruppen enthaltenden, thermoplastischen Kunststoffen können noch andere thermoplastische Kunststoffe in Abmischung mit jenen nach dem erfindungsgemäßen Verfahren verschäumt werden. Beispiele für solche andere Thermoplasten sind Polystyrole, Polymethacrylate, Polyethylenterephthalate sowie sogenannte thermoplastische Mehrphasenkunststoffe wie beispielsweise Acrylnitril-Styrol-Butadien-Polymere, Mischungen aus Polystyrol mit kautschukelastischen Misch- oder Segmentpolymerisaten auf der Basis von Butadien, Styrol, Styrol-Acrylnitril-Copolymeren mit Butadien-Acrylnitril-Polymeren. Mischungsbestandteil können auch Zwei-Phasen-Kunststoffe sein, bei denen die harte Phase auf der Basis von Copolymeren aus Styrol und/oder Alkylstyrol und/oder Methylmethacrylat mit Acrylnitril mit einer kautschukelastischen Phase auf der Basis von Butadien schlagfest modifiziert wird. Diese anderen thermoplastischen Kunststoffe werden vorzugsweise in Mengen von weniger als 50 Gew.-%, bezogen auf die Summe der zu verschäumenden Thermoplasten bestehend aus Ester- und/oder Carbonatgruppen enthaltenden Thermoplasten und anderen Thermoplasten, eingesetzt.

Geeignete Polystyrole sind beispielsweise Homopolymerisate des Styrols oder Mischpolymerisate des Styrols mit vorzugsweise Acrylnitril und/oder Butadien, und/oder Maleinsäureester, die z.B. durch Suspensionspolymerisation in Gegenwart von Katalysatoren aus den Monomeren bzw. der Mischung der

monomeren mit $\overline{M}w$ von 10.000—600.000 erhalten werden ($\overline{M}w$ wird gemessen in DMF bei c 5 g/l und 20°C). (Literatur dazu siehe: Beilsteins Handbuch der Organischen Chemie, vierte Auflage, Drittes Ergänzungswerk, Bd. 5, Seiten 1163—1169, Springer Verlag 1964, H. Ohlinger, Polystyrol, 1. Teil, Herstellungsverfahren und Eigenschaften der Produkte, Springer Verlag 1955).

Geeignete Polymethacrylate sind beispielsweise $C_1$—$C_4$-Alkylmethacrylatpolymere, also Polymerisate der Methyl-, Ethyl-, Propyl- und -Butylmethacrylsäureester, vorzugsweise des Methyl- und Ethyl-methacrylsäureesters. Es sind sowohl Homopolymerisate als auch Copolymerisate dieser Mthacrylsäureester zu verstehen. Darüber hinaus können bis maximal 9,5 Gew.-% andere ethylenisch ungesättigte, copolymerisierbare Monomere, bezogen jeweils auf Gesamtgewicht an diesen ungesättigten Monomeren und den Methacrylsäureestern der Polymethacrylate copolymerisiert sein, so daß die erfindungsgemäß geeigneten $C_1$—$C_4$-Alkylmethacrylatpolymeren aus 90,5 Gew.-% bis 100 Gew.-% an Alkyl-methacrylat-Einheiten und aus 9,5 Gew.-% bis 0 Gew.-% an anderen ethylenisch ungesättigten Monomereneinheiten aufgebaut sind.

Andere ethylenisch ungesättigte copolymerisierbare Monomere sind beispielsweise (Meth)Acrylnitril, (α-Methyl) Styrol, Bromstyrol, Vinylacetat, Acrylsäure-$C_1$—$C_8$-alkylester, (Meth)Acrylsäurearylester, (Meth)-Acrylsäure, Ethylen, Propylen, N-Vinylpyrrolidon, Vinylsulfonsäure(salze) oder Styrolsulfonsäure(salze).

Die erfindungsgemäß geeigneten Polymethacrylate stellen in bestimmten organischen Lösungsmitteln lösliche Stoffe dar und besitzen somit einen linearen oder verzweigten Aufbau; gelhaltige Polymere, also solche mit vernetzten Strukturen, sind darunter nicht subsummiert.

Die Polymethacrylate können nach bekannten Polymerisationsverfahren hergestellt werden, vorzugsweise aber durch radikalische oder thermische Polymerisation. Als Polymerisationsverfahren eignen sich Verfahren in Emulsion, Masse, Suspension, Dispersion, insbesondere die Emulsions-, vorzugsweise aber die Masse- beziehungsweise Lösungspolymerisation. Die Molekulargewichte der Polymethacrylate können durch bekannte verfahrensbedingte Maßnahmen beispielsweise durch Verwendung von Mercaptanen als Reglern in weiten Bereichen variiert werden. Üblicherweise besitzen die erfindungsgemäß einsetzbaren Polymethacrylate derartige Molekulargewichte (beziehungsweise Staudinger-Indices, beziehungsweise Schmelzviskositäten), die deren thermoplastische Spritzguß- oder Extrusionsverarbeitung sinnvoll machen.

Geeignete Polyalkylenglykolterephthalate sind z.B. solche auf Basis von Ethylenglykol, Propandiol-1,3, butandiol-1,4, Hexandiol-1,6 und 1,4-Bis-hydroxymethylcyclohexan. Die Molekulargewichte ($\overline{M}w$) dieser Polyalkylenglykolterephthalate liegen zwischen 10 000 und 80 000. Die Polyalkylenglykolterephthalate können nach bekannten Verfahren beispielsweise aus Terephthalsäuredialkylester und dem entsprechenden Diol durch Umesterung erhalten werden. Beispielsweise geht man von einem niederen Alkylester der Terephthalsäure, vorzugsweise dem Dimethylester, aus und estert diesen mit einem Überschuß an Diol in Gegenwart geeigneter Katalysatoren zum Bishydroxyalkylester der Terephthalsäure um. Dabei wird die Temperatur ausgehend von 140°C auf 210—220°C erhöht. Der in Freiheit gesetzte Alkohol wird abdestilliert. Die Aufkondensation erfolgt anschließend bei Temperaturen von 210—280°C, der Druck wird dabei stufenweise bis auf weniger als 13 Pa (1 Torr) erniedrigt, wobei das überschüssige Diol abdestilliert wird.

Die erfindungsgemäß einzuhaltenden Einarbeitungstemperaturen richten sich einerseits nach der Schmelztemperatur der zu verschäumenden Kunststoffe, andererseits dürfen etwa 240°C nicht überschritten werden, wenn eine vorzeitige Zersetzung der erfindungsgemäß einzusetzenden Treibmittelkombination aus den Verbindungen I + II vermieden werden soll.

Die alternativ mögliche Vermischung des erfindungsgemäß einzusetzenden Verbindungsgemisches aus I und II, das sogenannte Aufpudern kann mit pulverförmigen Verbindungen aus I und II in überlicher Weise, beispielsweise in mit Rührwerken versehenen Mischbehältern erfolgen.

Es ist auch möglich, eines oder beide Komponenten der erfindungsgemäßen Kombination in Form eines "Konzentrates" zu verarbeiten. Hierbei werden die Komponenten in üblichen Mischaggregaten wie Einwellenschneckenextrudern oder Zweiwellenschneckenextrudern oder Knetern in bekannter Weise in das thermoplastische Polymer unter den bereits genannten Bedingungen eingearbeitet. Die beiden Komponenten der Treibmittelkombinationen können auch in getrennten "Konzentraten" verarbeitet werden, wobei die jeweilige Menge an Komponente I bzw. II von 1 bis 20 Gew.-%, vorzugsweise von 2 bis 10%, bezogen auf Gewicht an thermoplastischem Kunststoff variiert werden kann, es ist aber auch möglich, ein gemeinsames Treibmittelkonzentrat mit beiden Komponenten herzustellen, das die Komponente I in Mengen von 1 bis 20 Gew.-%, vorzugsweise von 2 bis 10 Gew.-% und die Komponente II in Mengen von 0,5 bis 10 Gew.-%, vorzugsweise von 1 bis 5 Gew.-%, bezogen jeweils auf Gewicht an thermoplastischem Kunststoff enthält. Die erfindungsgemäße Treibmittelkombination kann auch zusammen mit anderen, bereits bekannten Treibmitteln eingesetzt werden. Andere bekannte, mitzuverwendende Treibmittel sind beispielsweise 5-Phenyltetrazol oder Hydrazincarbonsäurediisopropylester.

Diese anderen, mitzuverwendenden Treibmittel werden in Mengen von 0,05 bis 0,2 Gew.-%, bezogen auf Gewicht an thermoplastischem Kunststoff, eingesetzt.

Dem zu verschäumenden Ester- und/oder Carbonatgruppen enthaltenden, thermoplastischen Kunststoffen können noch die üblichen Additive wie Stabilisatoren gegen Hitze und UV-Licht, Farbstoffe, Pigmente, Weichmacher, Wachse, Gleitmittel und Füllstoffe in bekannter Weise vor der Einarbeitung der erfindungsgemäßen Treibmittelkombination aus den Komponenten I und II eingearbeitet werden oder

auch zugleich mit der erfindungsgemäß einzusetzenden Treibmittelkombination eingearbeitet werden.

Das erfindungsgemäß Verschäumungsverfahren kann beispielsweise mit bekannten Verarbeitungsmaschinen wie zum Beispiel Spritzgußmaschinen erfolgen.

Die erfindungsgemäß erhältlichen Kunststoffschäume finden ihren technischen Einsatz in vielfältigen Anwendungen, besonders im Elektrobereich, z.B. als Geräte- oder Lampenabdeckungen, wobei insbesondere großvolumige und großflächige Teile interessant sind.

Beispiele

Das Verfahren unter Verwendung der erfindungsgemäßen Treibmittelkombination sei am Beispiel der Herstellung von geschäumten Polycarbonat-Formkörpern demonstriert.

Das in den folgenden Beispielen zur Formschaum-Herstellung benutzte Polycarbonat ist ein mittelviskoses Polycarbonat mit einem mittleren Molekulargewicht Mw von ca. 29000 bzw. einer relativen Lösungsviskosität von 1,295 in Methylenchlorid, bei 25°C und einer Konzentration von 0,5 g Polycarbonat in 100 ml Methylenchlorid.

Es enthält als Nucleierungshilfsmittel 5 Gew.-% Glas, zur besseren Entformbarkeit eines der üblichen Entformungshilfsmittel sowie Weiß- und Graupigmente in einer Menge von ca. 1 Gew.-% Die Formschaum-Herstellung erfolgte in einem Werkzeug der Dimension 30 cm × 30 cm × 0,6 cm mit einem zentralen Stangenanguß unter Verwendung einer Spritzgußanlage mit Verschlußdüse vom Typ DEMAG D 430 und einer Temperatureinstellung von 260°C, 280°C, 300°C, 300°C (Düse). Das zu verschäumende Polycarbonat wurde wie üblich 4 Stunden bei 120°C vorgetrocknet.

Die Treibmittel in Beispiel 2, 3 und 4 wurden in einem Taumelmischer auf das Polycarbonat aufgetrudelt.

In Beispiel 1, 5 und 6 wurden separate Treibmittelkonzentratate der einzelnen Komponenten hergestellt (jeweils 10% bei Isatosäureanhydrid und 5-Phenyltetrazol, 2% bei $KBF_4$) und mit zu verschäumenden Polycarbonat im richtigen Verhältnis vorgemischt.

| Beispiel Nr. | Treibmittel bzw. -gemisch | relative Lösungsvisk. | Schlagzähigkeit nach DIN 53453 | Bemerkung |
|---|---|---|---|---|
| 1 | 0,3 Gew.-% 5-Phenyltetrazol | 1,257 | 35 | |
| 2 | 0,5 Gew.-% ISA | 1,292 | | Form nicht vollständig gefüllt |
| 3 | 0,2 Gew.-% $KBF_4$ | 1,290 | | kein Aufschäumen |
| 4 | 0,5 Gew.-% ISA + 0,25% $KBF_4$ | 1,293 | 72 | |
| 5 | 0,5 Gew.-% ISA + 0,2% $KBF_4$ + 0,1% 5-Phenyltetrazol | 1,276 | 36 | |
| 6 | 0,1 Gew.-% Phenyltetrazol | | | Form nicht vollständig gefüllt |

Der Vergleich von Beispiel 1 und Beispiel 4 zeigt, daß das Treibmittelgemisch Isatosäureanhydrid/Kaliumtetrafluoroborat keinen Abbau der Polymeren bewirkt, während 5-Phenyltetrazol zu einer merklichen Verringerung der Lösungsviskosität führt.

Die Wirkung des Aktivators Kaliumtetrafluoroborat wird durch Vergleich der Beispiele 2 und 4 deutlich.

**Patentansprüche**

1. Verwendung der Verbindungen der allgemeinen Formel I

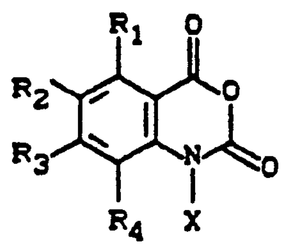

(I)

worin $R_1$ bis $R_4$ gleich oder verschieden Wasserstoff, geradkettige oder verzweigte Alkylreste mit 1 bis 4

Kohlenstoffatomen, Hydroxy- oder Nitrogruppen oder Halogenatome sowie $R_2$ darüber hinaus noch einen Molekülrest folgender Formel

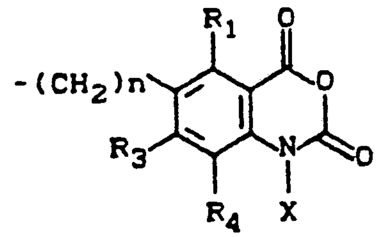

wobei n von 0—4 variieren kann, die Reste $R_1$, $R_3$ und $R_4$ die oben aufgeführte Bedeutung haben und X Wasserstoff oder geradkettige oder verzweigte Alkylreste mit 1—4 Kohlenstoffatomen bedeuten, in Kombination mit Verbindungen der allgemeinen Formel II

$$A_pEF_q \qquad (II)$$

worin A ein Element der ersten Hauptgruppe des periodischen Systems bedeutet, E ein Element der dritten, vierten oder fünften Haupt- oder Nebengruppe des periodischen Systems, F für Fluor steht, p von 1—3 und q von 4—6 je nach Wertigkeit der Elemente E variieren können, gegebenenfalls in Kombination mit anderen bekannten Treibmitteln zur Herstellung von Schaumformteilen aus Ester- und/oder Carbonatgruppen enthaltenden thermoplastischen Kunststoffen.

2. Verfahren zur Herstellung von zelligen oder porösen Schaumstoffen aus Ester- und/oder Carbonatgruppen enthaltenden thermoplastischen Kunststoffen, dadurch gekennzeichnet, daß man Verbindungen der allgemeinen Formel I

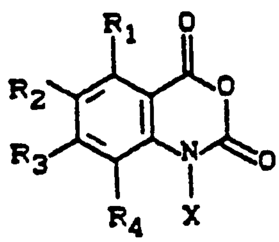

worin $R_1$ bis $R_4$ gleich oder verschieden Wasserstoff, geradkettige oder verzweigte Alkylreste mit 1 bis 4 Kohlenstoffatomen, Hydroxy- oder Nitrogruppen oder Halogenatome sowie $R_2$ darüber hinaus noch einen Molekülrest folgender Formel

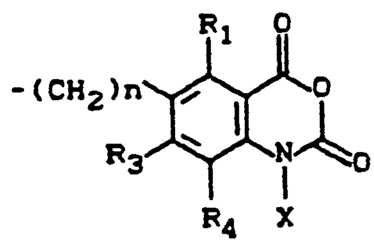

worin n von 0—4 variieren kann, die Reste $R_1$, $R_3$ und $R_4$ die oben aufgeführte Bedeutung haben und X Wasserstoff oder geradkettige oder verzweigte Alkylreste mit 1—4 Kohlenstoffatomen bedeuten, in Kombination mit Verbindungen der allgemeinen Formel II

$$A_pEF_q \qquad (II)$$

worin A ein Element der ersten Hauptgruppe des periodischen Systems bedeutet, E ein Element der dritten, vierten oder fünften Haupt- oder Nebengruppe des periodischen Systems, F für Fluor steht, p von 1—3 und q von 4—6 je nach Wertigkeit der Elemente E variieren können, gegebenenfalls in Kombination mit anderen bekannten Treibmitteln, in die Ester- und/oder Carbonatgruppen enthaltenden thermoplastischen Kunststoffe oberhalb deren Schmelztemperatur höchstens jedoch bei 240°C einarbeitet oder auf das Granulat dieser thermoplastischen Kunststoffe aufpudert und mit bekannten Verarbeitungsmaschinen bei Temperaturen von 150°C bis 350°C zu Schaum-Formteilen verarbeitet.

3. Verfahren gemäß Anspruch 2, dadurch gekennzeichnet, daß die Verarbeitung zu Schaum-Formteilen bei Temperaturen von 200°C bis 300°C erfolgt.

4. Schaumstoffe aus Ester- und/oder Carbonatgruppen enthaltenden thermoplastischen Kunststoffen, erhältlich nach dem Verfahren der Ansprüche 2 bis 3.

**Revendications**

1. Utilisation des composés de formule générale I

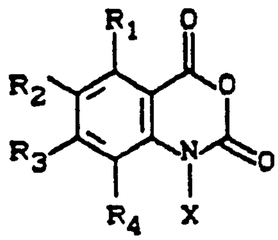

(I)

dans laquelle $R_1$ à $R_4$, identiques ou différents, représentent l'hydrogène, des restes alkyle à chaîne droite ou ramifiée ayant 1 à 4 atomes de carbone, des groupes hydroxy ou nitro, des atomes d'halogènes et $R_2$ peut représenter en outre un reste de molécule de formule suivante

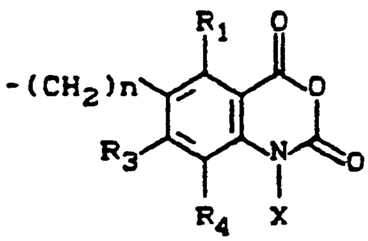

dans laquelle n peut varier de 0 à 4, les restes $R_1$, $R_3$ et $R_4$ ont la définition indiquée ci-dessus et X désigne l'hydrogène ou des restes alkyle à chaîne droite ou à chaîne ramifiée ayant 1 à 4 atomes de carbone, en association avec des composés de formule générale II

$$A_pEF_q \qquad (II)$$

dans laquelle A est un élément du premier groupe principal du Système Périodique, E est un élément du troisième, quatrième ou cinquième groupe principal ou sous-groupe du Système Périodique, F désigne le fluor, p peut varier de 1 à 3 et q peut varier de 4 à 6 selon la valence des éléments E, le cas échéant en association avec d'autres porogènes connus, pour la production de pièces moulées en mousse de matières thermoplastiques contenant des groupes ester et/ou des groupes carbonate.

2. Procédé de production de mousses cellulaires ou poreuses de matières thermoplastiques contenant des groupes ester et/ou des groupes carbonate, caractérisé en ce qu'on met en oeuvre des composés de formule générale I

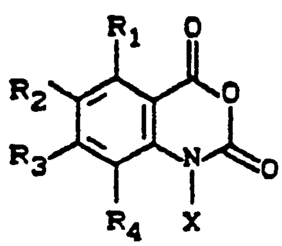

dans laquelle $R_1$ à $R_4$, identiques ou différents, représentent l'hydrogène, des restes alkyle à chaîne droite ou à chaîne ramifiée ayant 1 à 4 atomes de carbone, des groupes hydroxy ou nitro ou des atomes d'halogènes, et $R_2$ peut représenter en outre un reste de molécule de formule suivante

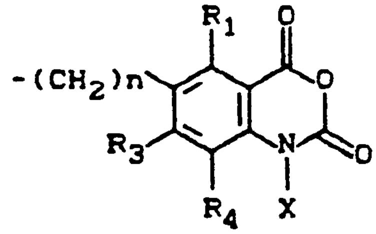

dans laquelle n peut varier de 0 à 4, les restes $R_1$, $R_3$ et $R_4$ ont la définition indiquée ci-dessus et X désigne l'hydrogène ou des restes alkyle à chaîne droite ou à chaîne ramifiée ayant 1 à 4 atomes de carbone, en association avec des composés de formule générale II

$$A_pEF_q \qquad (II)$$

où A est un élément du premier groupe principal du Système Périodique, E est un élément du troisième, quatrième ou cinquième groupe principal ou sous-groupe du Système Périodique, F désigne le fluor, p peut varier de 1 à 3 et q peut varier de 4 à 6 selon la valence des éléments E, le cas échéant en association avec d'autres porogènes connus, dans les matières thermoplastiques contenant des groupes ester et/ou des groupes carbonate au-dessus de leur température de fusion mais au maximum à 240°C, ou bien on en saupoudre le granulé de ces matières thermoplastiques et on les transforme en pièces moulées en mousse avec des machines connues de mise en oeuvre, à des températures de 150 à 350°C.

3. Procédé suivant la revendication 2, caractérisé en ce que la transformation en pièces moulées en mousse est effectuée à des températures de 200 à 300°C.

4. Mousses de matières thermoplastiques contenant des groupes ester et/ou des groupes carbonate, pouvant être obtenues par le procédé des revendications 2 et 3.

**Claims**

1. Use of the compounds of the general formula I

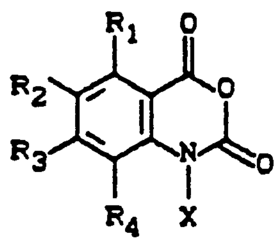

(I)

wherein $R_1$ to $R_4$ are identical or different and denote hydrogen, straight-chain or branched alkyl radicals having 1 to 4 carbon atoms, hydroxyl or nitro groups or halogen atoms, and $R_2$ moreover also denotes a molecule radical of the following formula

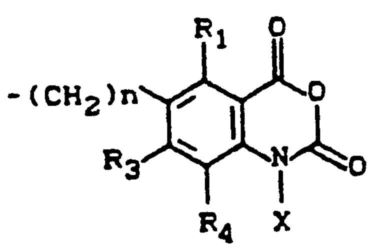

it being possible for n to vary from 1 to 4, the radicals $R_1$, $R_3$ and $R_4$ have the abovementioned meaning and X denotes hydrogen or straight-chain or branched alkyl radicals having 1—4 carbon atoms, in combination with compounds of the general formula II

$$A_pEF_q \qquad (II)$$

wherein A denotes an element of the first main group of the periodic table, E denotes an element of the third, fourth or fifth main or sub-group of the periodic table, F represents fluorine, p can vary from 1 to 3 and q can vary from 4 to 6, depending on the valency of the elements E, if appropriate in combination with other known blowing agents, for the production of foamed mouldings of thermoplastics containing ester and/or carbonate groups.

2. Process for the production of cellular or porous foams of thermoplastics containing ester and/or carbonate groups, characterized in that compounds of the general formula I

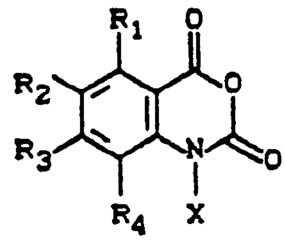

wherein $R_1$ to $R_4$ are identical or different and denote hydrogen, straight-chain or branched alkyl radicals having 1 to 4 carbon atoms, hydroxyl or nitro groups or halogen atoms, and $R_2$ moreover also denotes a molecule radical of the following formula

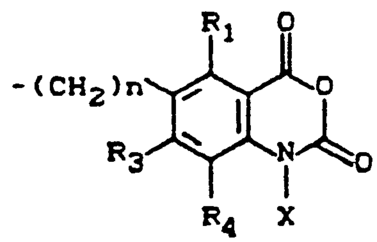

it being possible for n to vary from 1 to 4, the radicals $R_1$, $R_3$ and $R_4$ have the abovementioned meaning and X denotes hydrogen or straight-chain or branched alkyl radicals having 1—4 carbon atoms, in combination with compounds of the general formula II

$$A_pEF_q \quad (II)$$

wherein A denotes an element of the first main group of the periodic table, E denotes an element of the third, fourth or fifth main or sub-group of the periodic table, F represents fluorine, p can vary from 1 to 3 and q can vary from 4 to 6, depending on the valency of the elements E, if appropriate in combination with other known blowing agents, are incorporated into the thermoplastics containing ester and/or carbonate groups above their melting temperature, but at most at 240°C, or are dusted onto the granulate of these thermoplastics, and the mixture is processed to foamed mouldings on known processing machines at temperatures of 150°C to 350°C.

3. Process according to claim 2, characterized in that the processing to foamed mouldings is carried out at temperatures of 200°C to 300°C.

4. Foams of thermoplastics containing ester and/or carbonate groups, obtainable by the process of claims 2 and 3.